# EUROPEAN PATENT APPLICATION

(11) **EP 2 543 555 A1**
(43) Date of publication of application: **09.01.2013**
(21) Application number: 10846976.8
(22) Date of filing: 01.03.2010
(51) Int. Cl.: B60R 21/207

(54) **SIDE AIR BAG DEVICE**

(71) Applicant: Toyota Jidosha Kabushiki Kaisha, Toyota-shi, Aichi 471-8571 (JP)
(72) Inventor: KATSUMATA, Shunichi, Toyota-shi Aichi 471-8571 (JP)
(74) Representative: TBK
(86) International application number: PCT/JP2010/053279
(87) International publication number: WO 2011/108069

(57) **Abstract**

A side airbag device 1 includes a side airbag 2 configured to protect a side of an occupant D by being developed and expanded when a vehicle is impacted from the side direction. The side airbag 2 is formed with a shoulder portion compartment 21 corresponding to a shoulder portion Ds of the occupant D, a waist portion compartment 22, and a chest portion compartment 23. The shoulder portion compartment 21 includes a first wrap section 21a that overlaps, when viewed in a side direction of the vehicle, a B pillar 100, a second wrap section 21b that overlaps, when viewed in the side direction of the vehicle, a door main body section 201, and an intermediate section 21c that is formed between the first wrap section 21a and the second wrap section 21b and travels from the first wrap section 21a toward the second wrap section 21b along a door belt line DBL which is an end of the door main body section 201 on an upper side of the vehicle, when the side airbag 2 is developed and expanded. At the time of an impact from both sides, the shoulder portion Ds of the occupant D, which is in contact with the developed and expanded side airbag 2, can be sufficiently pressed to inner side of the vehicle by the developed and expanded side airbag 2.

## Description

### Field

The present invention relates to a side airbag device including a side airbag for protecting a side of an occupant in a vehicle by being developed and expanded when the vehicle is impacted from the side direction. Background

Recent vehicles are provided with a side airbag device for the purpose of protecting an occupant in a vehicle when the vehicle is impacted from the side direction. The side airbag device detects the side impact of the vehicle by an acceleration sensor and the like and operates an inflator. Gas is generated by operating the inflator and the generated gas is supplied to the side airbag. The side airbag to which the gas has been supplied is developed and expanded between the occupant and a door when viewed in the side direction of the vehicle. When the vehicle is impacted from the side direction, the side airbag device suppresses a shock from being directly applied from the door to the occupant at the time of impact by developing and expanding the side airbag. An ordinary side airbag is positioned at least at a waist portion and a chest portion of an occupant when the side airbag has been developed and expanded.

Further, there are Patent literatures 1 to 7 as examples of conventional side airbag devices. In the side airbag devices according to Patent Literatures 1 to 7, when a side air bag has been developed and expanded, the side airbag is positioned at a shoulder portion of an occupant when viewed in a side direction of a vehicle.

### Citation List

### Patent Literature

Patent Literature 1: Japanese Patent Application Laid-open No. 2000-071927
Patent Literature 2: Japanese Patent Application Laid-open No. 1998-297413
Patent Literature 3: Japanese Patent Application Laid-open No. 2005-238890
Patent Literature 4: Japanese Patent No. 3972688
Patent Literature 5: Japanese Patent Application Laid-open No. 2000-85515
Patent Literature 6: Japanese Patent No. 4032910
Patent Literature 7: International Publication Pamphlet No. WO 2006/049101

### Summary

### Technical Problem

A shoulder portion of an occupant may be positioned on an upper side of a vehicle than a door belt line depending on a vehicle. In the vehicle, since the side airbag is positioned also at a shoulder portion of the occupant when viewed in a side direction of the vehicle, the side airbag is positioned between the shoulder portion of the occupant and a door window. The door window is positioned more outer side of the vehicle than a lower section of the vehicle than the door belt line of a door. Accordingly, since a space between the side airbag and the door window becomes larger than a space between the side airbag and the door, when the developed and expanded side airbag has been in contact the shoulder portion of the occupant, the side airbag is likely to move outer side of the vehicle. Accordingly, when the vehicle is impacted from the side direction, there is a possibility that the shoulder portion of the occupant, which is in contact with the developed and expanded side airbag, cannot be sufficiently pressed to inner side of the vehicle by the developed and expanded side airbag.

Accordingly, an object of the present invention, which was made in view of the circumstances, is to provide a side airbag device capable of sufficiently press a shoulder portion of an occupant, which is in contact with a side airbag that is developed and expanded when a vehicle is impacted from the side direction, to inner side of the vehicle by the developed and expanded side airbag. Solution to Problem

In order to solve the above mentioned problem and achieve the object, a side airbag device according to the present invention includes a side airbag configured to protect a side of an occupant in a vehicle by being developed and expanded when the vehicle is impacted from the side direction, wherein the side airbag is formed with a plurality of compartments including a shoulder portion compartment corresponding to a shoulder portion of the occupant, and when the side airbag is developed and expanded, the shoulder portion compartment includes a first wrap section that overlaps, when viewed in a side direction of the vehicle, a pillar to which a door of the vehicle is adjacent in a front/back direction of the vehicle, a second wrap section that overlaps, when viewed in the side direction of the vehicle, a door main body section, in which a door window in the door is accommodated, and an intermediate section that is formed between the first wrap section and the second wrap section and travels from the first wrap section toward the second wrap section along a door belt line which is an end of the door main body section on an upper side of the vehicle.

In the side airbag device, it is preferable that when the side airbag is developed and expanded, pressure of the shoulder portion compartment becomes the highest pressure.

In the side airbag device, it is preferable that the plurality of the compartments include the shoulder portion compartment, a waist portion compartment corresponding to a waist portion of the occupant, and a chest portion compartment that is formed between the shoulder portion compartment and the waist portion compartment and corresponds to a chest portion of the occupant, wherein when the side airbag is developed and expanded, pressure of the chest portion compartment preferably becomes pressure lower than those of the shoulder portion compartment and the waist portion compartment.

In the side airbag device, it is preferable that when the side airbag is developed and expanded, the chest portion compartment is formed with a recessed section for arm which is more recessed to outer side of the vehicle than a periphery and corresponds to an arm of the occupant.

In the side airbag device, it is preferable to further includes an inflator configured to generate gas for developing and expanding the side airbag, wherein the side airbag is preferably formed with an inner tube for supplying the gas from the inflator to the plurality of the compartments, and the pressures of the plurality of the compartments when the side airbag is developed and expanded are preferably changed based on a flow path resistance when the gas is supplied to the plurality of compartments in the inner tube.

In the side airbag device, it is preferable that a suppression mechanism that suppresses the gas from flowing from the plurality of the compartments into the inner tube is provided between the inner tube and the plurality of the compartments.

In the side airbag device, it is preferable that the shoulder portion compartment has the highest gas tightness.

Further, in order to solve the above mentioned problem and achieve the object, a side airbag device according to the present invention includes a side airbag configured to protect a side of an occupant in a vehicle by being developed and expanded when the vehicle is impacted from the side direction, wherein the side airbag includes a first wrap section that overlaps, when viewed in a side direction of the vehicle, a pillar to which a door of the vehicle is adjacent in a front/back direction of the vehicle, and a second wrap section that overlaps, when viewed in the side direction of the vehicle, a lower section of the vehicle than a door window provided with the door, and a section of a contour line formed between the first wrap section and the second wrap section of the side airbag when viewed in the side direction of the vehicle is positioned on a lower side of the vehicle than a position on the uppermost side of the contour line in the vehicle in the first wrap section as well as positioned on an upper side of the vehicle than a position on the uppermost side of the contour line in the vehicle in the second wrap section when the side airbag is developed and expanded. Advantageous Effects of Invention

The side airbag device according to the present invention achieves an effect that since the shoulder portion compartment, which corresponds to the shoulder portion of the occupant, is supported at two points of the pillar by the first wrap section and the door by the second wrap section, the shoulder portion of the occupant which has been in contact with the shoulder portion compartment of the developed and expanded side airbag can be sufficiently pressed to inner side of the vehicle by the shoulder portion compartment when the vehicle is impacted from the side direction.

### Brief Description of Drawings

FIG. 1 is a view illustrating an example of a schematic configuration of a side airbag device.
FIG. 2 is a view illustrating an example of a schematic configuration of an inflator and an inner tube.
FIG. 3 is a view illustrating an accommodation method of a side airbag.

### Description of Embodiment

The present invention will be explained below in detail referring to drawings. Note that the present invention is not limited by the following embodiment. Further, the components in the following embodiment include components that can be easily assumed by a person skilled in the art or include substantial the same components.

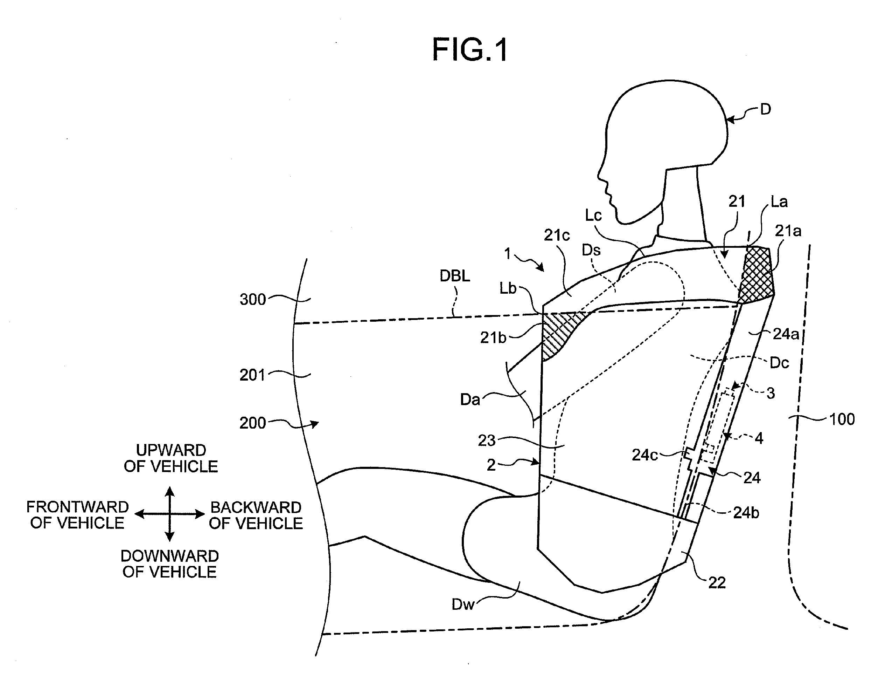

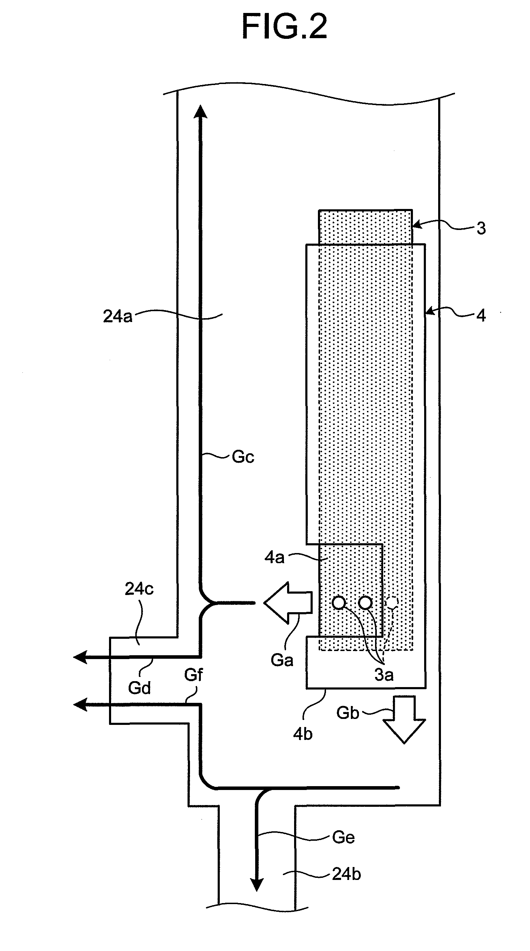

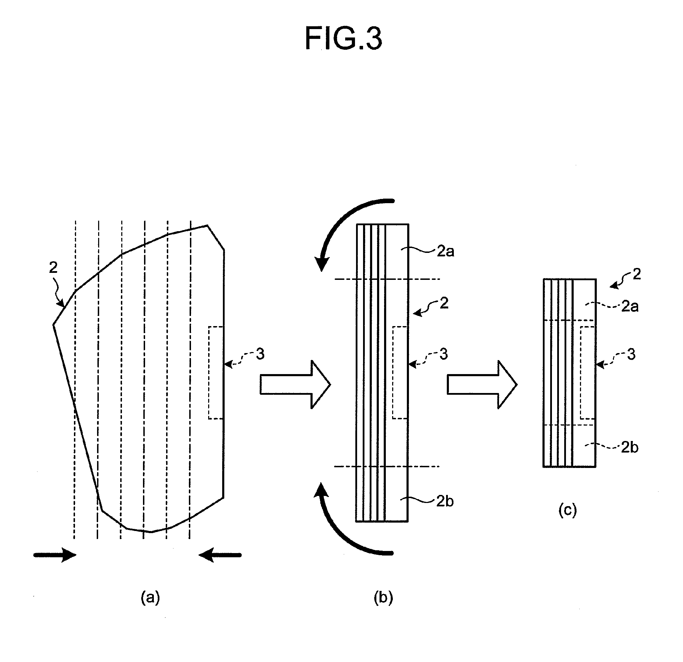

FIG. 1 is a view illustrating an example of a schematic configuration of a side airbag device. Further, FIG. 2 is a view illustrating an example of a schematic configuration of an inflator and an inner tube. FIG. 3 is a view illustrating an accommodation method of a side airbag. Note that FIG. 1 is a view when viewed in a side direction of a vehicle and shows a state that an occupant D is illustrated by a dummy and the occupant D sits on a not illustrated seat. Note that the dummy has a shoulder portion Ds, a chest portion Dc, a waist portion Dw, and an arm portion Da likewise the occupant.

A side airbag device 1 according to the embodiment includes a side airbag 2, an inflator 3, and a retainer 4 as illustrated in FIG. 1. The side airbag device 1 protects a side of the occupant D who sits on the seat of the vehicle by developing and expanding the side airbag 1 by a gas generated by the inflator 3 when the vehicle is impacted from the side direction. The side airbag 2 has been developed and expanded between the occupant D and a door 200 by the gas when viewed in the side direction of the vehicle.

Here, a B pillar (center pillar) in the embodiment is denoted by 100 which is a pillar adjacent to the door 200 in a front/back direction of the vehicle. The B pillar 100 is formed by extending in an up/down direction of the vehicle. An end on an upper side of the vehicle of both the ends of the B pillar (center pillar) 100 is coupled with a not illustrated loop side rail outer reinforcement, and an end on a lower side of the vehicle thereof is coupled with a not illustrated locker outer reinforcement. In the embodiment, the door 200 is a door via which the occupant D who sits on a not illustrated front seat gets on and off the vehicle and which is disposed between a not illustrated A pillar (front pillar) and the B pillar 100. The door 200 includes a door main body section 201, a not illustrated frame section which surrounds a door window 300 exposed from the door main body section 201, and a not illustrated power window system which can move the door window 300 upward and downward. The door main body section 201 can store the door window 300 moved downward by the power window system. The door window 300 is accommodated in the door main body section 201 from a door belt line DBL which is an end of the door main body section 201 on an upper side of the vehicle. That is, the door belt line DBL is a boundary between the door main body section 201 and the door window 300 exposed from the door main body section 201. A section of the door window 300 exposed from the door main body section 201 is positioned more outer side of the vehicle than the door main body section 201 (on a front sheet side of FIG. 1). Further, a door trim is formed to the door main body section 201 on the inner side of the vehicle. Further, the vehicle is mounted with a curtain airbag device corresponding to a head portion of the occupant D who sits on the seat. When the vehicle is impacted from the side direction, the curtain airbag device develops and expands a curtain airbag between the head portion of the occupant D and the door window 300 exposed from the door main body section 201 when viewed in the side direction of the vehicle, likewise the side airbag device 1. The developed and expanded curtain airbag is positioned above the developed and expanded side airbag 2 on an upper side of the vehicle. That is, a side portion of the occupant D is protected by the side airbag device 1 and the curtain airbag device.

As illustrated in FIG. 1, the side airbag 2 is developed and expanded when the vehicle is impacted from the side direction. The side airbag 2 is developed and expanded between the occupant D who sits on the seat and the door 200 and protects the side of the occupant D when the vehicle is impacted from the side direction. The side airbag 2 is formed by sewing a pair of base clothes composed of a woven cloth and the like in a bag-like shape. In the embodiment, the side airbag 2 includes a shoulder portion compartment 21, a waist portion compartment 22, a chest portion compartment 23, and an inner tube 24. That is, the side airbag 2 is formed with plural compartments including the shoulder section compartment 21. Here, the side airbag 2 is partitioned to the plural compartments by sewing and attaching the pair of base cloths in the bag-like shape.

The shoulder portion compartment 21 corresponds to the shoulder portion Ds of the occupant D who sits on the seat. When viewed in the side direction of the vehicle, the shoulder portion compartment 21 is disposed at a position which confronts the shoulder portion Ds of the occupant D who sits on the seat when the side airbag 2 has been developed and expanded. The shoulder portion compartment 21 is formed in a cylindrical shape by sewing and attaching the pair of the base clothes. The shoulder portion compartment 21 includes a first wrap section 21a, a second wrap section 21b, and an intermediate section 21c. The shoulder portion compartment 21 in the side airbag 2 is formed on an upper side of the vehicle when the side airbag 2 has been developed and expanded.

The first wrap section 21a is formed to one end of both the ends of the shoulder portion compartment 21. When the side airbag 2 has been developed and expanded, the first wrap section 21a is formed to overlap the B pillar 100 when viewed in the side direction of the vehicle. In the embodiment, when viewed in the side direction of the vehicle, the first wrap section 21a is a section of the shoulder portion compartment 21 which is positioned more rearward of the vehicle than an end of the B pillar 100 on a front side of the vehicle (In FIG. 1, a region hatched by slant lines). Note that a size of the first wrap section 21a which is occupied in the shoulder portion compartment 21 is changed by that a position of the seat to the door 200 when viewed in the side direction of the vehicle, in particular, a position of the seat in the front/back direction of the vehicle changes.

The second wrap section 21b is formed to the other end of both the ends of the shoulder portion compartment 21. When viewed in the side direction of the vehicle, the second wrap section 21b is formed to overlap the door main body section 201 when the side airbag 2 has been developed and expanded. In the embodiment, when viewed in the side direction of the vehicle, the second wrap section 21b is a section of the shoulder portion compartment 21 positioned on a lower side of the vehicle than the door belt line DBL (In FIG. 1, a region hatched by slant lines). Note that a size of the second wrap section 21b which is occupied in the shoulder portion compartment 21 is changed by that a position of the seat to the door 200 when viewed in the side direction of the vehicle, in particular, a position of the seat in the up/down direction of the vehicle changes.

The intermediate section 21c is formed between the first wrap section 21a of the shoulder portion compartment 21 and the second wrap section 21b. The intermediate section 21c is formed from the first wrap section 21a toward the second wrap section 21b along the door belt line DBL. In the embodiment, the intermediate section 21c is formed so that almost all the section of the intermediate section 21c is positioned on an upper side of the vehicle than the door belt line DBL. That is, the intermediate section 21c is formed so as to linearly connect the first wrap section 21a and the second wrap section 21b. In the embodiment, the intermediate section 21c is formed so that almost all the section of the intermediate section 21c is positioned on an upper side of the vehicle than the door belt line DBL.

Further, in the intermediate section 21c, when the side airbag 2 has been developed and expanded, a partial line Lc, which is formed between the first wrap section 21a and the second wrap section 21b, in a contour line of the side airbag 2 when viewed in the side direction of the vehicle is formed so as to be positioned on a lower
side of the vehicle than an uppermost side position La of the vehicle of the contour line in the first wrap section 21a as well as to be positioned on an upper side of the vehicle than an uppermost side position Lb of the vehicle of the contour line in the second wrap section 21b. When the side airbag 2 has been developed and expanded, even if the shoulder portion Ds of the occupant D is in contact with the shoulder portion compartment 21, the shoulder portion compartment 21 is supported by the B pillar 100 by the first wrap section 21a and by the door main body section 201 of the door 200 by the second wrap section 21b. That is, the shoulder portion compartment 21 is supported by the two different components of a component which constitutes the vehicle. Since the shoulder portion compartment 21 constitutes a tension structure member by being supported by the B pillar 100 and the door main body section 201 to obtain reaction force when the shoulder portion Ds of the occupant D is in contact with the shoulder portion compartment 21, even if the shoulder portion Ds of the occupant D is in contact with the developed and expanded side airbag 2, the shoulder portion Ds can be suppressed from moving outer side of the vehicle and the shoulder portion Ds can be sufficiently pressed to inner side of the vehicle by the shoulder portion compartment 21. Further, since the shoulder portion compartment 21 is formed in a linear cylindrical shape, an increase of an amount of gas with which the shoulder portion compartment 21 is filled for development and expansion can be suppressed as well as when the side airbag 2 has been developed and expanded, the shoulder portion compartment 21 can be promptly developed and expanded. Accordingly, when the side airbag 2 is developed and expanded at the time the vehicle is impacted from the side direction, since the shoulder portion compartment 21 can be developed and expanded at an early stage, the shoulder portion compartment 21 can be supported by the B pillar 100 and the door main body section 201 at an early stage.

Note that it is preferable that the shoulder portion compartment 21 has highest gas tightness in the plural compartments of the side airbag 2. In the embodiment, it is preferable that the shoulder portion compartment 21 is formed to have gas tightness as high as or higher than that of the waist portion compartment 22 and the chest portion compartment 23 is formed to have gas tightness lower than that of the shoulder portion compartment 21 and the waist portion compartment 22. After the side airbag 2 has been developed and expanded, the pressure of the side airbag 2 is lowered by that the gas with which the side airbag 2 is filled is discharged to the outside via the base clothes. Accordingly, the gas tightness of the shoulder portion compartment 21 can be improved, and an amount of gas discharged when the shoulder portion Ds of the occupant D has been in contact with the shoulder portion compartment 21 can be reduced. With the operation, even if the shoulder portion Ds of the occupant D is in contact with the shoulder portion compartment 21 when the vehicle is impacted from the side direction, since the shoulder portion compartment 21 can keep a shape when it was developed and expanded, the shoulder portion compartment 21 can sufficient press the shoulder portion Ds of the occupant D to inner side of the vehicle. Here, the gas tightness is improved by, for example, coating a coating agent for improving gas tightness to the base clothes, increasing tightness of a cloth which constitutes the base clothes, laminating base clothes, and the like.

The waist portion compartment 22 corresponds to the waist portion Dw of the occupant D who sits on the seat. When the side airbag 2 has been developed and expanded, the waist portion compartment 22 is disposed at a position confronting the waist portion Dw of the occupant D who sits on the seat when viewed in the side direction of the vehicle. The waist portion compartment 22 is formed in a bag-like shape by sewing and attaching a pair of base clothes. The waist portion compartment 22 is formed to the side airbag 2 on a lower side of the vehicle when the side airbag 2 has been developed and expanded.

The chest portion compartment 23 corresponds to the chest portion Dc of the occupant D who sits on the seat. When the side airbag 2 has been developed and expanded, the chest portion compartment 23 is disposed at a position which confronts the chest portion Dc of the occupant D who sits on the seat when viewed in the side direction of the vehicle. The chest portion compartment 23 is formed in a bag-like shape by sawing and attaching a pair of base clothes. The chest portion compartment 23 is formed between the shoulder portion compartment 21 and the waist portion compartment 22.

Note that it is preferable that the chest portion compartment 23 is formed with a not illustrated recessed section for arm corresponding to the arm Da of the occupant D who sits on the seat. The recessed section for arm is formed so as to be more recessed to outer side of the vehicle than a periphery when the side airbag 2 has been developed and expanded. The recessed section for arm is formed by closing a region, which corresponds to the arm Da of the occupant D, in a region in which, for example, a pair of the base clothes corresponds to the chest portion compartment 23 so that the region is not filled with gas and by sewing and attaching the base clothes. When the side airbag 2 is developed and expanded at the time the vehicle is impacted from the side direction, the recessed section for arm is entered with the arm portion Da of the occupant D. Accordingly, when the vehicle is impacted from the side direction, it can be suppressed that the arm portion Da rather than the shoulder portion Ds of the occupant D is pressed to inner side of the vehicle by the chest portion compartment 23. With the operation, a damage of the occupant D, which is caused by that the arm portion Da is pressed to inner side of the vehicle by the side airbag 2 in contact with the arm portion Da, can be reduced. Further, since the shoulder portion Ds can be prevented from being rotated to inner side of the vehicle about the waist portion Dw by that the arm portion Da is pressed to inner side of the vehicle by the side airbag 2 in contact with the arm portion Da, the shoulder portion Ds of the occupant D can be reliably brought into contact with the shoulder portion compartment 21 when the vehicle is impacted from the side direction and thus the shoulder portion Ds of the occupant D can be reliably pressed to inner side of the vehicle.

The inner tube 24 supplies the gas from the inflator 3 to the plural compartments of the side airbag 2. As illustrated in FIG. 1 and FIG. 2, the inner tube 24 is formed in a cylindrical shape with one end opened by sawing and attaching a pair of base clothes. In the inner tube 24, the inflator 3 and the retainer 4 are accommodated in an inner space section 24a. In the inner tube 24, the open end on one side communicates with the shoulder portion compartment 21. Further, the inner tube 24 has a waist portion path 24b formed to the other end and communicates with the waist portion compartment 22 via the waist portion path 24b. Further, the inner tube 24 is formed with a chest portion path 24c on an inside surface (an inner wall surface in a shorter direction which is a direction orthogonal to a longitudinal direction) and communicates with the chest portion compartment 23 via the chest portion path 24c. Accordingly, the gas generated by the inflator 3 is supplied to the shoulder portion compartment 21, the waist portion compartment 22, and the chest portion compartment 23 via the inner tube 24.

When the side airbag 2 has been developed and expanded, the pressures of the plural compartments, that is, the pressures of the respective compartments are set so as to become a higher pressure in the sequence of the shoulder portion compartment 21, the waist portion compartment 22, and the chest portion compartment 23. That is, the pressure of the shoulder portion compartment 21 is set to the highest pressure in the plural compartments and the pressure of the chest portion compartment 23 is set to pressure lower than those of the shoulder portion compartment 21 and the waist portion compartment 22. Accordingly, since the pressure of the shoulder portion compartment 21 which is supported by the B pillar 100 and the door main body section 201 becomes the high pressure and tension as the tension structure member can be improved, a support force to the shoulder portion Ds when the shoulder portion Ds of the occupant D is in contact with the shoulder portion compartment 21 can be improved. In the embodiment, the pressures of the respective compartments are changed by making flow path resistances when the gas generated by the inflator 3 is supplied to the respective compartments in the inner tube 24 different.
The inner tube 24 is formed so that the flow path resistances become larger in the sequence of a flow path until the flow path communicates with the shoulder portion compartment 21, a flow path until the flow path communicates with the waist portion compartment 22, and a flow path until the flow path communicates with the chest portion compartment 23. The flow path resistances are made different by, for example, adjusting flow path areas and the like in a portion of the inner space section 24a communicating with the shoulder portion compartment 21, the waist portion path 24b, and the chest portion path 24c. Accordingly, the pressures of the respective compartments can be made different by a simple configuration. Note that the pressure of the shoulder portion compartment 21 may be set as high as that of the waist portion compartment 22. That is, it is sufficient that the pressures of the respective compartments are set to satisfy shoulder portion compartment 21 ≥ waist portion compartment 22 » chest portion compartment 23.

As illustrated in FIG. 2, the inflator 3 generates the gas for developing and expanding the side airbag 2. The inflator 3 is formed in a cylindrical shape having both ends closed and a gas generation agent is enclosed therein. The inflator 3 has a not illustrated ignition section and is formed with plural gas ejection holes 3a for ejecting the gas generated therein to the outside. The ignition section of the inflator 3 is electrically connected to a not illustrated control device. The control device determines whether or not a side impact of the vehicle has occurred based on an output value of an acceleration sensor and the like for detecting a side impact of the vehicle, and when the control device determines that the side impact of the vehicle has occurred, the control device outputs a drive current to the ignition section. The ignition section of the inflator 3 is ignited by the drive current and generates the gas from the gas ejection holes 3a.

As illustrated in FIG. 2, the retainer 4 holds the inflator 3 as well as fix the side airbag 2 and the inflator 3 to the seat. As illustrated in FIG. 2, the retainer 4 is formed in a cylindrical shape so as to surround an outer peripheral section of the inflator 3 with at least one end opened. The retainer 4 is fixed to inside of a not illustrated seat back, for example, to a not illustrated seat back frame by a not illustrated fixing means together with the side airbag 2 and the inflator 3. The retainer 4 is formed with gas supply openings 4a, 4b for guiding the gas generated by the inflator 3. The gas supply opening 4a is formed so as to confront a part or all of the plural gas ejection holes 3a as well as a section between the chest portion path 24c and a section communicating with the shoulder portion compartment 21.
The gas supply opening 4a is formed by cutting out a part of an outer peripheral surface of the retainer 4. The gas supply opening 4b is formed to an end of the inflator 3 on one side in a longitudinal direction (axis direction), i.e., to an end of the inner tube 24 on a side where the waist portion path 24b is formed.

The retainer 4 divides a flow of the gas generated by the inflator 3 in two directions by the gas supply openings 4a, 4b (arrows Ga, Gb of FIG. 2). A flow rate of the gas supplied from the gas supply openings 4a, 4b to the inner tube 24 can be optionally adjusted by a shape of the gas supply openings 4a, 4b and adjusted in response to setting of pressure and an expansion revolution speed when the respective compartments have been developed and expanded. The gas supplied from the gas supply opening 4a to the inner tube 24 is collided to an inner wall surface of the inner tube 24, almost all of the gas flows to the section communicating with the shoulder portion compartment 21 (arrow Gc of FIG. 2) and a part of the gas flows to the chest portion path 24c (arrow Gd of FIG. 2). Further, the gas supplied from the gas supply opening 4b to the inner tube 24 is collided to the inner wall surface of the inner tube 24, almost all of the gas flows to the waist portion path 24b (arrow Ge of FIG. 2) and a part of the gas flows to the chest portion path 24c (arrow Gf of FIG. 2). That is, almost all of the gas generated by the inflator 3 flows to the shoulder portion compartment 21 via the section communicating with the shoulder portion compartment 21 and to the waist portion compartment 22 via the waist portion path 24b and a part of the gas flows to the chest portion compartment 23 via the chest portion path 24c. Accordingly, in the embodiment, the side airbag 2 is set so that when the side airbag 2 has been developed and expanded, at least the waist portion compartment 22 and the shoulder portion compartment 21 are developed and expanded before the chest portion compartment 23 is developed and expanded. That is, a developing/expanding speed, which is a speed at which the waist portion compartment 22 and the shoulder portion compartment 21 are developed and expanded, is set faster than that of the chest portion compartment 23. Note that a developing/expanding speed of the shoulder portion compartment 21 is set as fast as or slower than that of the waist portion compartment 22.

The side airbag device 1 is accommodated at a position of the seat back which confronts the door 200 when viewed in the side direction of the vehicle. Here, the side airbag 2 is accommodated inside of the seat back in a folded state. As illustrated in FIG. 3, a method of folding the side airbag 2 is such that, first, the side airbag 2 in a developed state ((a) of FIG. 3) is mountain-folded using a longitudinal direction as a reference (single-dashed line of FIG. 3) and valley-folded (dotted line of FIG. 3) alternately to thereby reduce a length of the side airbag 2 in the shorter direction ((b) of FIG. 3). Next, both ends 2a, 2b of the folded side airbag 2 in the longitudinal direction are mountain-folded, respectively using the shorter direction as a reference and further a length of the side airbag 2 in the longitudinal direction is reduced ((c) of FIG. 3). The side airbag 2 is accommodated in the seat back in the state that the lengths of the side airbag 2 in the longitudinal direction and the shorter direction are reduced, respectively by that the side airbag 2 is folded. Note that a seat cover for covering the seat back is configured so that a section of the seat cover corresponding to an accommodated section is torn as the side airbag 2 is developed and expanded. With the operation, the side airbag 2 falls out from inside of the seat back when the side airbag 2 has been developed and expanded and is positioned between the door and the occupant D.

When the side airbag device 1 is operated by the side impact of the vehicle, the side airbag 2, which has fallen out from the seat back, is developed and expanded between the occupant D and the door 200 when viewed in the side direction of the vehicle as described above. In the developed and expanded side airbag 2, since the pressures of the shoulder portion compartment 21 and the waist portion compartment 22 become higher than the chest portion compartment 23, the tension of the shoulder portion compartment 21 and the waist portion compartment 22 becomes larger than the chest portion compartment 23 and the shoulder portion compartment 21 and the waist portion compartment 22 become hard. Further, the shoulder portion compartment 21 is supported by the B pillar 100 and the door main body section 201. Accordingly, the shoulder portion Ds of the occupant D in contact with the shoulder portion compartment 21 and the waist portion Dw of the occupant D in contact with the waist portion compartment 22, that is, the portions which can easily move the occupant D to inner side of the vehicle by being pressed are sufficiently pressed to inner side of the vehicle by the shoulder portion compartment 21 and the waist portion compartment 22. Since not only the waist portion Dw of the occupant D but also the shoulder portion Ds can be sufficiently pressed promptly to inner side of the vehicle, the occupant D can be promptly moved to inner side of the vehicle. With the operation, since the occupant D is moved to inner side of the vehicle by the side airbag 2 faster than that the door 200 presses the occupant D by being deformed to inner side of the vehicle by the impact, a shock acting on the occupant D by that the door 200 presses the occupant D can be reduced. Further, the pressure of the chest portion compartment 23 is lower than the shoulder portion compartment 21 and the waist portion compartment 22, the chest portion Dc of the occupant D can be suppressed from being pressed by the chest portion compartment 23.

Note that, in the embodiment, although the door 200, to which the side airbag device 1 corresponds, corresponds to the not illustrated front seat, the door 200 may correspond to a rear seat. In the case, when the side airbag 2 has been developed and expanded, the shoulder portion compartment 21 of the side airbag 2 is supported by a C pillar and the door main body section 201.

Further, in the embodiment, it is preferable to provide a suppression mechanism, which suppresses the gas from flowing from the plural compartments into the inner tube 24, between the inner tube 24 and the plural compartments. As the suppression mechanism, there are a section communicating with the shoulder portion compartment 21, diaphragms formed to the waist portion path 24b and the chest portion path 24c, a section which communicates with the shoulder portion compartment 21 when the gas tends to flow from the respective compartments toward the inner tube 24, valves for closing the waist portion path 24b and the chest portion path 24c, and the like. As a result, since the gas supplied to the respective compartments can be suppressed from returning to the inner tube 24, when the side airbag 2 has been developed and expanded, the pressures of the respective compartments can be suppressed from being reduced.

### Industrial Applicability

As described above, the side airbag device is useful to a side airbag device having a side airbag for protecting a side of an occupant in a vehicle by being developed and expanded when the vehicle is impacted from the side direction and in particular suitable to sufficiently press a shoulder portion of the occupant in contact with the developed and expanded side airbag to inner side of the vehicle by the developed and expanded side airbag when the vehicle is impacted from the side direction.

### Reference Signs List

- 1: SIDE AIRBAG DEVICE
- 2: SIDE AIRBAG
- 21: SHOULDER PORTION COMPARTMENT
- 22: WAIST PORTION COMPARTMENT
- 23: CHEST PORTION COMPARTMENT
- 24: INNER TUBE
- 3: INFLATOR
- 4: RETAINER
- 100: B PILLAR
- 200: DOOR
- 201: DOOR MAIN BODY SECTION
- 300: DOOR WINDOW
- D: OCCUPANT
- Ds: SHOULDER PORTION
- Dw: WAIST PORTION
- Dc: CHEST PORTION
- Da: ARM PORTION
- DBL: DOOR BELT LINE

## Claims

1. A side airbag device, comprising:
a side airbag configured to protect a side of an occupant in a vehicle by being developed and expanded when the vehicle is impacted from the side direction, wherein
the side airbag is formed with a plurality of compartments including a shoulder portion compartment corresponding to a shoulder portion of the occupant, and
when the side airbag is developed and expanded, the shoulder portion compartment includes
a first wrap section that overlaps, when viewed in a side direction of the vehicle, a pillar to which a door of the vehicle is adjacent in a front/back direction of the vehicle,
a second wrap section that overlaps, when viewed in the side direction of the vehicle, a door main body section, in which a door window in the door is accommodated, and
an intermediate section that is formed between the first wrap section and the second wrap section and travels from the first wrap section toward the second wrap section along a door belt line which is an end of the door main body section on an upper side of the vehicle.

2. The side airbag device according to claim 1, wherein when the side airbag is developed and expanded, pressure of the shoulder portion compartment becomes the highest pressure.

3. The side airbag device according to claim 2, wherein the plurality of the compartments include
the shoulder portion compartment,
a waist portion compartment corresponding to a waist portion of the occupant, and
a chest portion compartment that is formed between the shoulder portion compartment and the waist portion compartment and corresponds to a chest portion of the occupant, wherein
when the side airbag is developed and expanded, pressure of the chest portion compartment becomes pressure lower than those of the shoulder portion compartment and the waist portion compartment.

4. The side airbag device according to claim 3, wherein when the side airbag is developed and expanded, the chest portion compartment is formed with a recessed section for arm which is more recessed to outer side of the vehicle than a periphery and corresponds to an arm of the occupant.

5. The side airbag device according to any one of claims 2 to 4, further comprising:
an inflator configured to generate gas for developing and expanding the side airbag, wherein
the side airbag is formed with an inner tube for supplying the gas from the inflator to the plurality of the compartments, and
the pressures of the plurality of the compartments when the side airbag is developed and expanded are changed based on a flow path resistance when the gas is supplied to the plurality of compartments in the inner tube.

6. The side airbag device according to claim 5, wherein a suppression mechanism that suppresses the gas from flowing from the plurality of the compartments into the inner tube is provided between the inner tube and the plurality of the compartments.

7. The side airbag device according to claim 2, wherein the shoulder portion compartment has the highest gas tightness.

8. A side airbag device, comprising:
a side airbag configured to protect a side of an occupant in a vehicle by being developed and expanded when the vehicle is impacted from the side direction, wherein
the side airbag includes
a first wrap section that overlaps, when viewed in a side direction of the vehicle, a pillar to which a door of the vehicle is adjacent in a front/back direction of the vehicle, and
a second wrap section that overlaps, when viewed in the side direction of the vehicle, a lower section of the vehicle than a door window provided with the door, and
a section of a contour line formed between the first wrap section and the second wrap section of the side airbag when viewed in the side direction of the vehicle is positioned on a lower side of the vehicle than a position on the uppermost side of the contour line in the vehicle in the first wrap section as well as positioned on an upper side of the vehicle than a position on the uppermost side of the contour line in the vehicle in the second wrap section when the side airbag is developed and expanded.
